# FASCICULE DE BREVET EUROPEEN

(11) **EP 2 332 832 B1**
(45) Date de publication et mention de la délivrance du brevet: **27.03.2013**
(21) Numéro de dépôt: 10014719.8
(22) Date de dépôt: 18.11.2010
(51) Int. Cl.: B64D 1/22

(54) **Aéronef muni d'un dispositif d'aide au pilotage lorsqu'il porte une charge externe avec une élingue, et procédé mis en oeuvre par ledit dispositif**
Fluggerät mit Steuerungshilfegerät für den Transport von einer aussen hängenden Last und Methode zur Verwendung der Steuerungshilfe
Aircraft provided with a pilot aid device when carrying an external load hanging by a cable and method to operate said pilot aid

(30) Priorité: 08.12.2009 FR 0905919
(43) Date de publication de la demande: 15.06.2011
(73) Titulaire: EUROCOPTER, 13725 Marignane Cédex (FR)
(72) Inventeur: Jimenez, Florian, 13100 Aix En Provence (FR)
(74) Mandataire: GPI & Associés

(56) Documents cités:
- EP-A1- 1 146 317
- WO-A1-2007/042492
- WO-A2-2007/132454

## Description

La présente invention concerne un aéronef muni d'un dispositif d'aide au pilotage lorsqu'il porte une charge externe avec une élingue, et procédé mis en oeuvre par ledit dispositif.

Le domaine technique de l'invention est donc celui des dispositifs d'accrochage d'une charge externe à un aéronef.

En effet, un aéronef, et plus particulièrement un giravion de type hélicoptère, peut être équipé de manière optionnelle d'une installation pour transporter des charges externes.

Ainsi, l'aéronef comporte généralement une structure porteuse, un crochet-délesteur tournant ou non tournant étant fixé à cette structure porteuse de ce giravion. Une élingue est alors accrochée à ce crochet-délesteur afin de permettre l'emport de charges externes lourdes.

Le crochet-délesteur peut être fixé à la structure porteuse par de multiples moyens :
- un premier moyen dénommé parfois « sling » en langue anglaise, ce premier moyen est du type cardan en étant muni de deux axes de pivotement orthogonaux entre eux, l'application de l'effort de l'élingue se faisant en un point sur la structure porteuse,
- un deuxième moyen dénommé parfois « swing » en langue anglaise, ce deuxième moyen comportant un cadre suspendu à la structure porteuse par quatre câbles de suspension,
- un troisième moyen mettant en oeuvre une poutre à laquelle est accroché le crochet-délesteur, la poutre étant généralement fixée en deux points à la structure porteuse, et,
- un quatrième moyen mettant en oeuvre une perche fixée sur la boîte de transmission principale du giravion, le crochet-délesteur étant articulé à cette perche.

En outre, le crochet-délesteur autorise le largage de la charge externe en vol, afin de libérer cette charge externe en un lieu déterminé ou lorsqu'une situation de détresse se présente.

Lors d'un vol, l'élingue de l'aéronef tend à se déplacer par rapport à cet aéronef ce qui peut conduire à des accidents.

En premier lieu, il est courant d'utiliser un giravion muni d'une élingue pour positionner une charge externe lourde à un endroit précis. Dans des conditions de vol difficiles, la charge peut se bloquer contre un obstacle, endommager un élément extérieur tel qu'un bâtiment ou encore heurter un opérateur.

Les règlements de certification à respecter pour obtenir une autorisation de vol n'impose pas de systèmes de surveillance particuliers. Par contre, les réglementations opérationnelles requièrent parfois des précautions, comme l'emploi de rétroviseurs pour surveiller le balancement de l'élingue par exemple.

En second lieu, si la charge externe ou l'élingue s'accroche à un obstacle au sol, le giravion se trouve bloqué. Du fait de l'inertie du giravion, des efforts importants sont exercés sur l'élingue. Ces efforts peuvent entraîner une rupture de l'élingue ce qui libère le giravion.

Cependant, compte tenu de la brutalité de la manoeuvre, l'inclinaison du disque formé par les pales du rotor peut osciller vers l'arrière durant une phase transitoire. Les pales risquent alors de heurter, voire de couper la poutre de queue du giravion.

De plus, la portion d'élingue restant fixée au giravion tend à remonter brutalement et risque de s'emmêler dans un rotor du giravion.

On comprend donc qu'il est intéressant de surveiller la charge externe pour éviter un accident.

Les documents suivants présentent l'arrière plan technologique des installations de transport de charge.

Plus précisément, le document GB2437407 divulgue l'existence d'un système muni d'un crochet pour suspendre une charge et d'un moyen de détachement de cette charge.

Le document FR2575550 présente un système qui fournit en temps réel le poids supporté par les crochets-délesteurs auxquels est arrimée une charge externe.

Enfin, le document FR2197766 prévoit un moyen explosif pour décrocher le crochet supportant la charge et sectionner l'élingue.

Par ailleurs, pour éviter un incident provoqué par une inclinaison importante de l'élingue accrochant une charge externe, divers dispositifs sont connus

Le document EP 0259250 montre un hélicoptère auquel est suspendue une benne pourvue de stabilisateurs.

Le document FR2149777 présente un système de stabilisation d'une charge externe sous un aéronef prévoyant d'agir sur les commandes de vol afin que l'aéronef réalise des mouvements correcteurs pour atténuer un mouvement pendulaire d'une charge externe. L'ajustement est réalisé en utilisant la vitesse de la variation de l'angle entre un câble de support et la pesanteur.

Le document JP19960101019 décrit un treuil apte à limiter les accélérations subies par un corps, suspendu à ce treuil via une élingue.

Le document GB1074465 présente un dispositif pour limiter l'angle de balancement d'une élingue fixée à un treuil par rapport à l'axe de la pesanteur.

Il en va de même pour le document US3904156 qui prévoit l'action de vérins sur une élingue rigide.

Ces dispositifs sont intéressants mais tendent à exclure le pilote. En effet, ces dispositifs sont de type actif et ne permettent au pilote d'agir ou de prendre une décision en fonction d'une situation donnée.

Le document FR2661887 prévoit un dispositif permettant à un pilote de maintenir une élingue selon la pesanteur durant un vol stationnaire. Ce dispositif est muni de deux détecteurs d'inclinaisons pour fournir l'inclinaison de l'élingue par rapport à la pesanteur ainsi que d'un système d'affichage pourvu de deux aiguilles croisées commandées respectivement par des informations transmises par lesdits deux détecteurs.

En vol stationnaire, ce dispositif permet d'aider le pilote à manoeuvrer son giravion.

Toutefois, ce dispositif ne paraît pas être efficace dans toutes les configurations de vol.

Par ailleurs, on connaît le document WO2007/1132454 qui prévoit des moyens pour visualiser une zone sur laquelle un hélicoptère doit déposer une charge externe.

Le document EP1146317 propose un horizon artificiel affichant l'angle de tangage d'un hélicoptère superposé par addition à la dérivée dans le temps d'un angle entre la perpendiculaire à la terre et une direction selon laquelle agit une charge externe sur ledit hélicoptère.

Enfin, l'arrière plan technologique inclut aussi le document W02007/042492, relatif à la signalisation lumineuse d'un angle d'approche à un aéronef.

La présente invention a alors pour objet de proposer un aéronef portant une charge externe à l'aide d'une élingue suspendue muni d'un dispositif d'aide au pilotage permettant au pilote de l'aéronef d'éviter tout incident provoqué par la charge externe et/ ou l'élingue, le pilote restant maître de la situation.

On note que l'on entend dans la suite du texte par « élingue » tout moyen longiligne permettant de soutenir une charge, à savoir un câble, un barreau, ou encore un moyen muni d'un barreau et d'un câble par exemple.

Selon l'invention, un aéronef est muni d'une cellule et d'une élingue fixée à la cellule par une structure porteuse, l'élingue étant fixée à un point de fixation de la structure porteuse, un plan vertical transversal local passant par le point de fixation étant parallèle à un axe de lacet et à un axe de tangage de l'aéronef, un plan vertical longitudinal local passant par le point de fixation étant parallèle à un axe de lacet et à un axe de roulis de l'aéronef, les plans verticaux longitudinal local et transversal local se coupant en un axe vertical de l'aéronef.

On note que le terme « local » est utilisé dans la mesure où les plans locaux sont associés au référentiel de l'aéronef. On verra par la suite, que le terme « absolu » est utilisé pour dénommer des plans associés au référentiel terrestre.

Cet aéronef est remarquable en ce qu'il est pourvu d'un dispositif d'aide au pilotage comportant :
- un moyen de détermination principal d'un premier angle principal entre l'axe vertical et une première projection primaire de l'élingue sur le plan vertical transversal local ainsi que d'un deuxième angle principal entre l'axe vertical et une deuxième projection primaire de l'élingue sur le plan vertical longitudinal local, et
- un moyen d'affichage muni d'un écran de visualisation pour afficher quantitativement les premier et deuxième angles principaux.

Par suite, le moyen de détermination évalue les premier et deuxième angles principaux de manière à estimer l'angulation de l'élingue relativement à la cellule de l'aéronef, un giravion de type hélicoptère par exemple, contrairement notamment au document FR2661887.

L'invention conserve alors son efficacité indépendamment de la phase de vol, et même durant un vol d'avancement ou en virage.

Le moyen d'affichage permet au pilote de connaître la valeur des premier et deuxième angles principaux. Il peut alors entreprendre des manoeuvres pour éviter que ces premier et deuxième angles principaux atteignent des niveaux susceptibles de correspondre à un incident.

En outre, le moyen d'affichage permet au pilote de visualiser la position de l'élingue par rapport à la cellule aisément, sans avoir à faire appel à un rétroviseur notamment.

Le dispositif d'aide au pilotage assiste donc le pilote pour l'aider à anticiper d'éventuels incidents

Le dispositif d'aide au pilotage, et de fait l'aéronef pourvu de ce dispositif, peut de plus comporter une ou plusieurs des caractéristiques qui suivent.

Ainsi, le moyen d'affichage peut présenter :
- une première et une deuxième droites sécantes en une intersection représentant l'axe vertical, la première droite étant une abscisse d'un diagramme donnant le premier angle principal et la deuxième droite étant l'ordonnée du diagramme donnant le deuxième angle principal,
- une pluralité de lignes de délimitation fermées délimitant chacune une zone correspondant à une criticité donnée.

Autrement dit, la première droite représente la première trace du plan vertical transversal local sur un plan horizontal local orthogonal au plan vertical transversal local et au plan vertical longitudinal local, la deuxième droite représentant la deuxième trace du plan vertical longitudinal local sur un plan horizontal local.

Dès lors, le moyen d'affichage affiche avantageusement en temps réel un marquage représentant l'élingue dans ledit diagramme, le marquage étant mobile en fonction de la position de l'élingue relativement à ladite cellule.

Par exemple, le marquage est un spot lumineux permettant d'obtenir la valeur des premier et deuxième angles principaux. En effet, en projetant orthogonalement le spot lumineux sur l'abscisse du diagramme, et en connaissant l'échelle utilisée sur cette abscisse, le pilote obtient le premier angle principal. A l'inverse, en projetant orthogonalement le spot lumineux sur l'ordonnée du diagramme, et en connaissant l'échelle utilisée sur cette ordonnée, le pilote obtient le deuxième angle principal.

Au moins une ligne de délimitation est éventuellement un cercle concentrique centré sur l'intersection, à savoir le centre du diagramme.

Par exemple, le moyen d'affichage présente une pluralité de lignes de délimitations circulaires concentriques, ou encore toutes les lignes de délimitations sont circulaires.

Pour assister plus efficacement le pilote de l'aéronef, le moyen d'affichage comprend une première zone entre l'intersection et une première ligne de délimitation dans laquelle une position de l'élingue par rapport à l'axe vertical déterminée à l'aide du couple premier angle principal / deuxième angle principal est une position optimale inférieure à une première position limite prédéterminée représentée par la première ligne de délimitation.

Le moyen d'affichage peut aussi comprendre une deuxième zone entre une première ligne de délimitation et une deuxième ligne de délimitation entourant la première ligne de délimitation dans laquelle une position de l'élingue par rapport à l'axe vertical déterminée à l'aide du couple premier angle principal / deuxième angle principal est une position acceptable comprise entre la première position limite prédéterminée et une deuxième position limite prédéterminée représentée par la deuxième ligne de délimitation.

Cette deuxième limite prédéterminée peut correspondre à une limite imposée par certains règlements, à savoir une limite de 30 degrés applicable aux premier et deuxième angles principaux.

De plus, le moyen d'affichage peut aussi comprendre une troisième zone entre une deuxième ligne de délimitation et une troisième ligne de délimitation entourant la deuxième ligne de délimitation dans laquelle une position de l'élingue par rapport à l'axe vertical déterminée à l'aide du couple premier angle principal / deuxième angle principal est une position à risque située entre la deuxième limite prédéterminée et une troisième limite prédéterminée représentée par la troisième ligne de délimitation.

Il est autorisé d'aller dans la troisième zone dans la mesure où le pilote peut encore manoeuvrer son aéronef afin de placer l'élingue dans les première et deuxième zones.

Par contre, le moyen d'affichage comprend optionnellement une quatrième zone interdite au-delà d'une troisième ligne de délimitation entourant une deuxième ligne de délimitation dans laquelle au moins le premier ou le deuxième angle principal a une valeur interdite.

En effet, si l'élingue se trouve dans la quatrième zone, les capacités de manoeuvre de l'aéronef ne permettent plus au pilote de retourner dans une zone moins défavorable. Le pilote doit alors décrocher l'élingue en agissant sur un crochet-délesteur.

De surcroit, le moyen d'affichage comprend une quatrième ligne de délimitation entourant éventuellement une troisième ligne de délimitation pour borner ladite quatrième zone.

En outre, le dispositif d'aide au pilotage peut comporter un moyen d'alarme sonore apte à délivrer un signal sonore lorsque le marquage est positionné dans l'une desdites zones, ledit signal sonore variant d'une zone à une autre.

Ainsi, si le marquage est situé dans la première zone, le dispositif émet un premier signal sonore, si le marquage est situé dans la deuxième zone le dispositif émet un deuxième signal sonore, si le marquage est situé dans la troisième zone le dispositif émet un troisième signal sonore, si le marquage est situé dans la quatrième zone le dispositif émet un quatrième signal sonore.

Le signal sonore peut être déclenché par le moyen de visualisation sur ordre du moyen de détermination par exemple.

Afin de déterminer les premier et deuxième angles principaux, le moyen de détermination peut comporter un processeur et une mémoire, le processeur faisant appel à des instruments dédiés.

Selon un premier mode de réalisation, l'élingue comportant un barreau muni d'une pluralité de cibles et accroché au point de fixation, le dispositif est pourvu d'au moins deux moyens de mesure optiques reliés au moyen de détermination principal, le moyen de détermination principal déterminant les premier et deuxième angles principaux en fonction des cibles focalisées par lesdits moyens de mesure optiques.

Les moyens de mesure optiques peuvent comporter un laser ou des caméras vidéos stéréoscopiques.

Le moyen de détermination détermine les premier et deuxième angles principaux en fonction des cibles focalisées. Par exemple, un processeur du moyen de détermination fait appel à un tableau donnant lesdits angles principaux en fonction desdites cibles, ce tableau étant établi par essai.

Selon un deuxième mode de réalisation, la structure porteuse comportant un premier et un deuxième axes de pivotement orthogonaux entre eux, le dispositif comporte :
- un premier capteur angulaire agencé sur le premier axe de pivotement, le premier capteur étant relié au moyen de détermination principal pour lui transmettre un signal relatif au premier angle principal, et
- un deuxième capteur angulaire agencé sur le deuxième axe de pivotement, le deuxième capteur étant relié au moyen de détermination principal pour lui transmettre un signal relatif audit deuxième angle principal.

Les premier et deuxième capteurs angulaires sont par exemple des potentiomètres, la tension électrique transmise par ces potentiomètres au moyen de détermination variant en fonction de la position angulaire des axes de pivotement associés.

Selon un troisième mode de réalisation, un plan horizontal absolu passant par le point de fixation et étant perpendiculaire à la pesanteur appliquée au point de fixation, un plan vertical longitudinal en roulis passant par le point de fixation et présentant une angulation égale à un angle de roulis de l'aéronef avec le plan vertical longitudinal local, un plan vertical transversal en tangage passant par le point de fixation et présentant une angulation égale à un angle de tangage de l'aéronef avec le plan vertical transversal local, le dispositif comporte un premier moyen de mesure angulaire solidaire de l'aéronef relié au moyen de détermination principal pour transmettre à ce moyen de détermination principal des informations relatives à un angle de roulis et à un angle de tangage de l' aéronef.

De plus, le dispositif comporte un deuxième moyen de mesure angulaire relié au moyen de détermination principal pour transmettre à ce moyen de détermination principal des informations relatives à un premier angle secondaire entre une première projection secondaire de l'élingue sur un plan vertical transversal local et la pesanteur appliquée au point de fixation ainsi qu'à un deuxième angle secondaire entre une deuxième projection secondaire de l'élingue sur un plan vertical longitudinal local et ladite pesanteur appliquée au point de fixation.

Le moyen de détermination détermine alors le premier angle principal en soustrayant l'angle de roulis au premier angle secondaire. De même, le moyen de détermination détermine alors le deuxième angle principal en soustrayant l'angle de tangage au deuxième angle secondaire.

Autrement dit, on détermine l'angulation de l'élingue par rapport à la pesanteur et l'angulation de la cellule de l'aéronef par rapport à cette même pesanteur, puis on en déduit l'angulation de l'élingue par rapport à la cellule.

Outre un aéronef, l'invention a pour objet un procédé d'aide au pilotage d'un aéronef muni d'un cellule et d'une élingue fixée à la cellule par une structure porteuse, l'élingue étant fixée à un point de fixation de la structure porteuse, un plan vertical transversal local passant par le point de fixation étant parallèle à un axe de lacet et à un axe de tangage de l'aéronef, un plan vertical longitudinal local passant par le point de fixation étant parallèle à un axe de lacet et à un axe de roulis de l'aéronef, les plans verticaux longitudinal local et transversal local se coupant en un axe vertical de l'aéronef au cours duquel :
- on détermine un premier angle principal entre l'axe vertical et une première projection primaire de l'élingue sur le plan vertical transversal local ainsi qu'un deuxième angle principal entre l'axe vertical et une deuxième projection primaire de l'élingue sur le plan vertical longitudinal local, et,
- on affiche quantitativement les premier et deuxième angles principaux pour les présenter à un pilote de l'aéronef.

L'aéronef peut être un aéronef à voilure tournante, tel qu'un hélicoptère.

Optionnellement, un écran de visualisation présentant, éventuellement de manière immuable :
- une première et une deuxième droites sécantes en une intersection représentant ledit axe vertical, la première droite étant une abscisse d'un diagramme donnant ledit premier angle principal et la deuxième droite étant l'ordonnée dudit diagramme donnant ledit deuxième angle principal, et,
- une pluralité de lignes de délimitation fermées délimitant chacune une zone correspondant à une criticité donnée,
on affiche en temps réel dans le diagramme un marquage représentant la position de l'élingue, le marquage étant mobile en fonction de la position de l'élingue relativement à la cellule.

La présente invention a aussi pour objet le procédé de fabrication du dispositif précité.

L'invention et ses avantages apparaîtront avec plus de détails dans le cadre de la description qui suit avec des exemples de réalisation donnés à titre illustratif en référence aux figures annexées qui représentent :
- la figure 1, une coupe longitudinale schématique d'un aéronef selon l'invention,
- la figure 2, un vue transversale d'un aéronef selon l'invention,
- les figures 3 et 4 des diagrammes schématiques explicitant les premier et deuxième angles principaux déterminés,
- la figure 5, un schéma présentant un moyen d'affichage selon l'invention,
- la figure 6, un schéma présentant un premier mode de réalisation,
- les figures 7 et 8, des schémas présentant un deuxième mode de réalisation, et,
- la figure 9, un schéma présentant un troisième mode de réalisation.

Les éléments présents dans plusieurs figures distinctes sont affectés d'une seule et même référence.

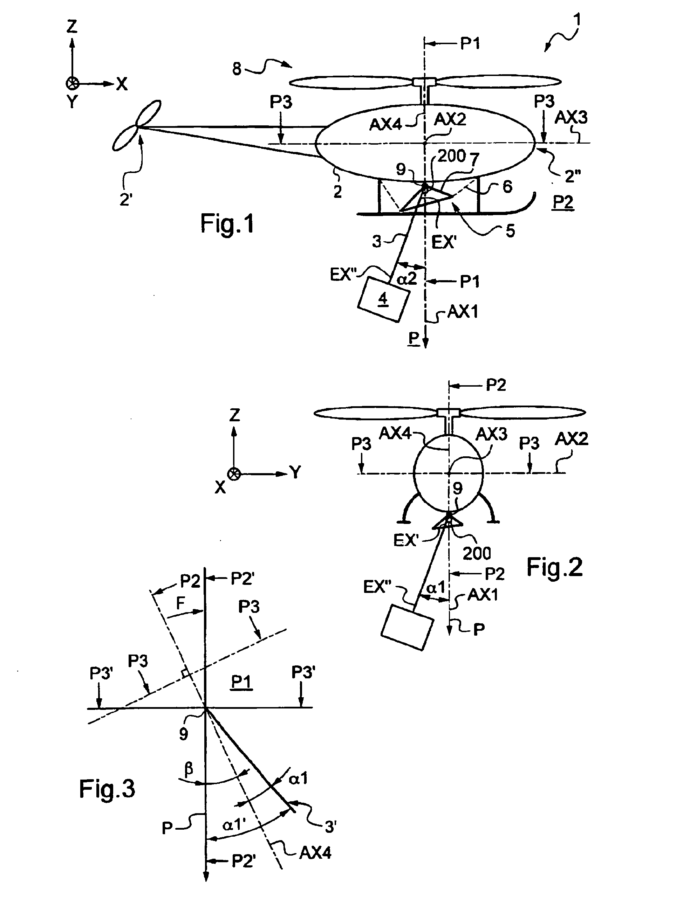

On note que trois directions X, Y et Z orthogonales les unes par rapport aux autres sont représentées sur les figures 1, 2, 6, 7 et 8. La direction X est dite longitudinale, une autre direction Y est dite transversale puis une troisième direction Z est dite d'élévation.

La figure 1 présente une vue schématique d'un aéronef 1 selon l'invention.

Cet aéronef 1 comporte une cellule 2 qui s'étend longitudinalement d'une extrémité arrière 2' vers une extrémité avant 2" selon une direction longitudinale X. De plus, l'aéronef 1 présenté est un aéronef à voilure tournante 8, plus particulièrement un giravion de type hélicoptère muni d'un rotor principal 8 de propulsion et de sustentation.

Afin de pouvoir transporter une charge externe 4, l'aéronef comporte une structure porteuse 5 muni d'un point de fixation 9. La structure porteuse représentée sur la figure 1 est du type « swing » en comportant un cadre 5 suspendu à la cellule 2 par des câbles 6. Toutefois, cette structure porteuse peut être d'un autre type sans sortir du cadre de l'invention.

Une première extrémité EX' d'une élingue 3 est alors fixée au crochet-délesteur 200, ce crochet-délesteur 200 étant lui-même ancré à l'aéronef 1 par le point de fixation 9. La charge externe 4 est accrochée à la deuxième extrémité EX" de l'élingue 3.

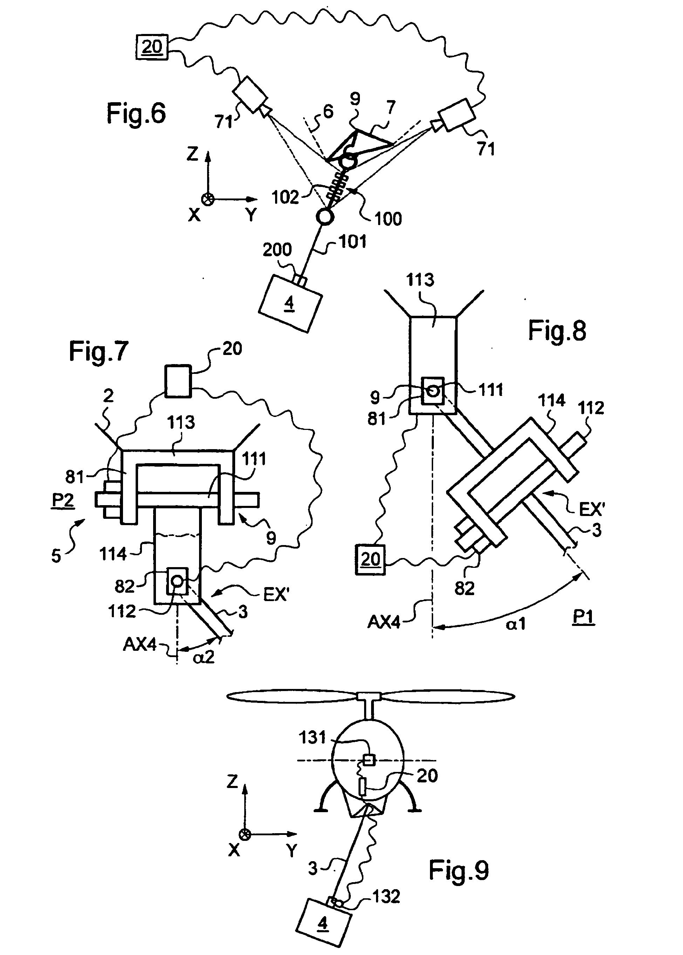

II est à noter que les figures 6, 7 et 8 présentent une variante, la première extrémité EX' d'une élingue 3 étant fixée au point de fixation 9, alors qu'une deuxième extrémité EX" de l'élingue 3 est pourvue du crochet-délesteur 200, ce crochet délesteur portant la charge externe.

L'élingue peut comporter uniquement une section souple composée d'un câble par exemple, uniquement une section rigide composée d'un barreau par exemple, ou encore d'une section souple et d'une section rigide.

Classiquement l'aéronef est à même de réaliser une rotation autour d'un axe de lacet AX1, d'un axe de tangage AX2 et d'un axe de roulis AX3. En contrôlant l'angle de lacet, l'angle de tangage et l'angle de roulis, un pilote est à même de diriger son aéronef.

A l'aide de ces axes, il est possible de définir des plans locaux liés à l'aéronef, à savoir un plan vertical transversal P1 passant par le point de fixation 9 et étant parallèle aux axes de lacet AX1 et de tangage AX2. Il est à noter que les axes de lacet AX1 et de tangage AX2 peuvent être inscrits dans le plan vertical transversal P1.

De même, on peut définir un plan vertical longitudinal local P2 passant par le point de fixation 9 et étant parallèle à l'axe de lacet AX1 et à l'axe de roulis AX3, les plans verticaux longitudinal local P2 et transversal local P1 ayant pour intersection un axe vertical AX4 de l'aéronef 1. Le plan vertical longitudinal local P2 correspond au plan de la feuille accueillant la figure 1, et l'axe vertical peut être confondu avec la pesanteur P.

Enfin, on peut définir un plan horizontal local P3 orthogonal au plan vertical transversal P1 et au plan vertical longitudinal P2, ce plan horizontal local P3 contenant l'axe de tangage AX2 par exemple.

En vol, à savoir en vol d'avancement ou encore en vol stationnaire, l'élingue 3 peut être amenée à se balancer.

En référence à la figure 1, l'élingue peut se balancer d'avant en arrière de manière à se rapprocher de l'arrière de l'aéronef, l'inverse étant aussi possible. De même, en référence à la figure 2, l'élingue peut se balancer du côté bâbord de l'aéronef vers son côté tribord de manière à se rapprocher du côté tribord de l'aéronef, l'inverse étant possible. De plus, il est possible de combiner ces deux types de mouvements.

En référence à la figure 3, selon l'invention on détermine la valeur d'un premier angle principal α1 présent entre une première projection 3' de l'élingue 3 sur le plan vertical transversal local P1 et l'axe vertical AX4.

On note que la figure 3 fait de plus apparaître la pesanteur P passant par le point de fixation 9 ainsi qu'un plan horizontal absolu P3' passant par le point de fixation 9, ce plan horizontal absolu P3' étant de plus perpendiculaire à la pesanteur P. En cas de roulis de l'aéronef, cet axe vertical AX4 présente une angulation égale à l'angle de roulis β de l'aéronef avec un plan vertical longitudinal en roulis P2', ce plan vertical longitudinal en roulis P2' étant obtenu en faisant effectuer une rotation autour du point de fixation 9 au plan vertical longitudinal local P2 d'un angle de roulis β selon la flèche F.

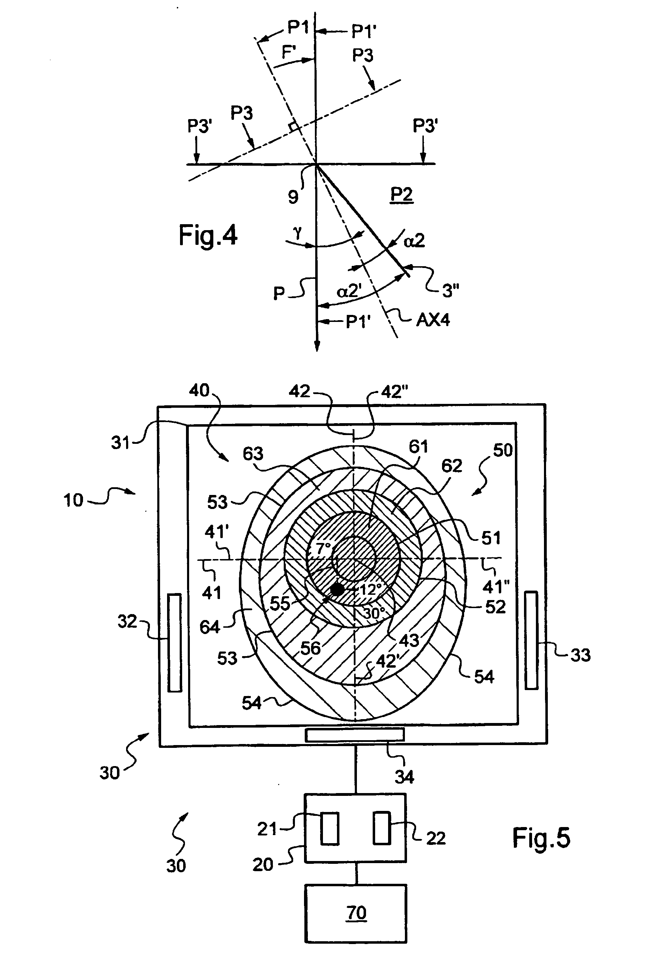

En référence à la figure 4, on détermine aussi la valeur d'un deuxième angle principal α2 présent entre une deuxième projection 3" de l'élingue 3 sur le plan vertical longitudinal local P2 et l'axe vertical AX4.

En cas d'un mouvement de tangage de l'aéronef, cet axe vertical AX4 présente une angulation égale à l'angle de tangage γ de l'aéronef avec un plan vertical transversal en tangage P1', ce plan vertical transversal en tangage P1' étant obtenu en faisant effectuer une rotation autour du point de fixation 9 au plan vertical transversal local P1 d'un angle de tangage γ selon la flèche F'.

Dès lors, on affiche en temps réel quantitativement les premier et deuxième angles principaux déterminés pour les présenter à un pilote. Cet affichage quantitatif peut résulter d'un affichage de la valeur des premier et deuxième angles principaux de manière numérique, à l'aide d'aiguille et/ ou en utilisant un diagramme présentant par exemple en abscisse la valeur du premier angle principal et en ordonnée la valeur du deuxième ange principal.

Cette dernière solution est avantageuse dans la mesure où elle permet d'indiquer visuellement la position de l'élingue par rapport à la cellule de l'aéronef, et en définitive par rapport au pilote. On comprend qu'elle permet au pilote de visualiser aisément l'angulation de l'élingue.

La figure 5 présente un dispositif 10 d'aide au pilotage d'un aéronef 1 muni d'une élingue 3 mettant en oeuvre le procédé précédemment décrit.

Le dispositif 10 comprend un moyen de détermination 20 qui coopère avec des instruments 70, les instruments 70 envoyant au moyen de détermination des informations relatives aux premier et deuxième angles principaux α1, α2.

Par exemple, le moyen de détermination 20 comprend un premier processeur 21 et une mémoire 22, le processeur faisant appel à des tableaux stockés dans ladite mémoire 22 pour déterminer lesdits premier et deuxième angles principaux α1, α2 en fonction desdites informations.

Le moyen de détermination calcule en permanence pendant le vol, et en temps réel, les premier et deuxième angles principaux α1, α2.

De plus, le dispositif 10 possède un moyen de visualisation 30 qui affiche sur un écran de visualisation 31 les premier et deuxième angles principaux α1, α2.

Par exemple, le moyen de détermination transmet les premier et deuxième angles principaux α1, α2 à un deuxième processeur 34 du moyen de visualisation, ce deuxième processeur requérant l'affichage des premier et deuxième angles principaux α1, α2 sur l'écran de visualisation 31. On note que le moyen de détermination peut être intégré au moyen d'affichage, les premier et deuxième processeurs 21, 34 constituant par exemple un seul et même processeur remplissant plusieurs fonctions.

A partir du moment où il est allumé, l'écran de visualisation présente une première et une deuxième droites 41, 42 se coupant en une intersection 43. Ces première et deuxième droites 41, 42 sont perpendiculaires entre elles et représentent respectivement l'abscisse et l'ordonnée d'un diagramme 40. La première droite est alors relative au premier angle principal α1 exprimé en degrés, la deuxième droite étant relative au deuxième angle principal α2 exprimé en degrés.

Par convention, on peut considérer qu'une première demi-droite primaire 41' partant de l'intersection 43 vers la gauche de la feuille sur laquelle est dessinée la figure 5 représente le côté bâbord de l'aéronef, le premier angle principal α1 ayant une valeur négative de ce côté. A l'inverse, on peut considérer qu'une première demi-droite primaire 41" partant de l'intersection 43 vers la droite de la feuille sur laquelle est dessinée la figure 5 représente le côté tribord de l'aéronef, le premier angle principal α1 ayant une valeur positive de ce côté.

De même, on peut considérer qu'une deuxième demi-droite primaire 42' partant de l'intersection 43 vers le bas de la feuille sur laquelle est dessinée la figure 5 représente l'arrière 2' de l'aéronef, le deuxième angle principal α2 ayant une valeur négative de ce côté. A l'inverse, on peut considérer qu'une deuxième demi-droite secondaire 42" partant de l'intersection 43 vers le haut de la feuille sur laquelle est dessinée la figure 5 représente l'avant 2' de l'aéronef, le deuxième angle principal α2 ayant une valeur positive de ce côté.

En positionnant un marquage 56 relatif à l'inclinaison de l'élingue 3, le moyen d'affichage affiche bien quantitativement les premier et deuxième angles principaux α1, α2. En effet, en projetant ce marquage 56 orthogonalement sur les première et deuxième droites 41, 42 et en connaissant l'échelle de ces droites, le pilote peut connaître immédiatement la valeur des premier et deuxième angles principaux α1, α2. Pour faciliter son observation, les première et deuxième droites peuvent être graduées.

De plus, le moyen de visualisation peut afficher en complément la valeur numérique des premier et deuxième angles principaux α1, α2.

Par exemple, sur la figure 5 le premier angle principal α1 vaut -7 degrés alors que le deuxième angle principal α2 vaut -12 degrés.

En outre, le moyen de visualisation affiche une pluralité de lignes de délimitation fermées 50 délimitant chacune une zone associée à niveau de risque donné. Ces lignes de délimitation peuvent être circulaires et centrées sur l'intersection ou avoir une toute autre configuration.

Ainsi, le moyen d'affichage peut comprendre une première ligne de délimitation 51 délimitant une première zone 61, la première zone 61 étant de fait située entre l'intersection 43 et ladite première ligne de délimitation.

La première ligne de délimitation 51 représentée correspond à la position d'une élingue présentant un angle de 20 degrés avec l'axe vertical AX4. On comprend que toute combinaison premier angle principal / deuxième angle principal générant une inclinaison de l'élingue de 20° par rapport à l'axe vertical AX4, entraine le positionnement du marquage 56 sur la première ligne de délimitation 51.

De plus, le moyen d'affichage comprend une deuxième ligne de délimitation circulaire 52 qui entoure la première ligne de délimitation 51. Les première et deuxième lignes de délimitation 51, 52, concentrique selon l'exemple représenté délimitent une deuxième zone 62.

Une troisième ligne de délimitation 53, ayant de manière anecdotique la forme de la section d'un veuf, entoure la deuxième ligne de délimitation 52 de manière à borner une troisième zone 63.

Au-delà de cette troisième zone, on trouve une quatrième zone 64. Eventuellement, le moyen d'affichage affiche une quatrième ligne de délimitation 54 qui entoure la troisième ligne de délimitation pour délimiter la quatrième zone.

On note que le moyen d'affichage peut comporter des lignes intermédiaires pour favoriser sa lisibilité, telle que la ligne intermédiaire 55 située entre l'intersection 43 et la première ligne de délimitation 51

En fonction de la position de l'élingue 3 par rapport à la cellule 2 et notamment par rapport à l'axe vertical AX4, le marquage 56 se déplace dans le diagramme 40 en temps réel.

Lorsque le marquage se trouve dans la première zone 61, la position de l'élingue 3 par rapport à l'axe vertical AX4 déterminée à l'aide du couple premier angle principal α1/ deuxième angle principal α2 est une position optimale inférieure à une première position limite prédéterminée LIM1 représentée par la première ligne de délimitation 51.

Si l'élingue 3 continue à se balancer, le marquage 56 peut passer dans la deuxième zone 62. La position de l'élingue par rapport à l'axe vertical AX4 déterminée à l'aide du couple premier angle principal α1/ deuxième angle principal α2 est une position acceptable, à savoir comprise entre la première position limite prédéterminée LIM1 et une deuxième position limite prédéterminée LlM2 représentée par la deuxième ligne de délimitation 52.

La deuxième position limite prédéterminée LIM2 correspond à une limite normalement autorisée, par exemple un angle de 30 degrés entre l'élingue et l'axe vertical AX4. La première limite prédéterminée UM1 est déterminée en prenant une marge de sécurité donnée par rapport à la deuxième position limite prédéterminée LIM2.

Ainsi, lorsque le marquage 56 est dans la première zone 61, le pilote sait non seulement que l'élingue 3 ne risque pas d'engendrer un incident mais sait aussi qu'il a une marge importante avant d'atteindre la deuxième limite prédéterminée LIM2. Par contre, quand la deuxième zone 62 est atteinte, le pilote doit être vigilant.

Les première et deuxième zones 61, 62 représentent conjointement une zone de fonctionnement autorisée sans risque.

Le pilote doit normalement empêcher l'élingue 3 de se trouver dans la troisième zone 63, à savoir quand la position de l'élingue 3 par rapport à l'axe vertical AX4 déterminée à l'aide du couple premier angle principal α1/ deuxième angle principal α2 est une position à risque située entre la deuxième limite prédéterminée LlM2 et une troisième limite prédéterminée LIM3 représentée par la troisième ligne de délimitation 53. Cette troisième limite prédéterminée LIM3 prend en compte les capacités de manoeuvre de l'aéronef.

Quand le marquage 56 atteint la troisième zone 63, l'élingue se trouve dans une position potentiellement dangereuse. Néanmoins, on informe le pilote que les capacités de manoeuvre de l'aéronef 1 doivent lui permettent de repositionner l'élingue 3 dans la première ou la deuxième zone 61, 62.

La troisième zone 63 est donc une zone à risque.

Enfin, dans la quatrième zone 64 interdite située au-delà de la troisième limite prédéterminée LIM3, le pilote ne peut plus retourner dans une configuration sécurisée. II doit procéder au largage de l'élingue 3.

Il est à noter que le dispositif 10 peut être associé à un dispositif de largage automatique. Par exemple, le largage de la charge externe 4 peut être activé quand la troisième zone est atteinte, ce largage devenant effectif par exemple en fonction d'un paramètre supplémentaire comme la tension exercée sur l'élingue 3. Par contre, une fois la quatrième zone 64 atteinte, le largage de la charge externe est réalisé indépendamment de tout autre paramètre.

On note que l'affichage du diagramme, des lignes de délimitation et desdites zones est optionnellement immuable. Ainsi, , selon ce diagramme, ces lignes de délimitation et lesdites zones ne changent pas durant le vol dans la mesure où elles correspondent à un aéronef donné.

Par ailleurs, le dispositif 10 comporte un moyen d'alarme sonore muni par exemple d'enceintes 32, 33 agencées sur le moyen de visualisation 30. A chaque zone est associé un signal sonore dédié. Sans regarder l'écran de visualisation, le pilote peut encore connaître dans quelle zone est positionné le marquage 56.

Selon le premier mode de réalisation représenté sur la figure 6, l'élingue 3 comporte un barreau 100 prolongé par une portion inférieure 101. Le barreau 100 est alors fixé au point de fixation 9 alors que la portion inférieure est munie d'un crochet-délesteur 200.

Le barreau 100 est de plus pourvu d'une pluralité de cibles 100.

Les instruments 70 communiquant avec le moyen de détermination 20 incluent alors deux moyens de mesure optique 71, des caméras vidéo stéréoscopiques par exemple. Les moyens de mesure optiques indiquent alors au moyen de détermination 20 les cibles qu'ils repèrent. Le moyen de détermination 20 fait appel à sa mémoire 22 pour en déduire les premier et deuxième angles principaux α1, α2.

Les figures 7 et 8 présentent un deuxième mode de réalisation muni d'une structure porteuse 5 de type « sling ». Ainsi la structure porteuse comporte un premier et un deuxième axes de pivotement 111, 112.

Plus précisément, une première chape 113 en forme de U renversé est fixée à la cellule 2 de l'aéronef, puis est traversée par le premier axe de pivotement 111.

Ce premier axe de pivotement est solidaire d'une deuxième chape 114 en forme de U renversé traversée par un deuxième axe de pivotement 112. L'élingue est alors solidarisée au deuxième axe de pivotement 112.

Les instruments 70 comprennent alors un premier capteur 81 angulaire, de type potentiomètre par exemple, agencé sur le premier axe de pivotement 111. De plus, les instruments 70 comprennent alors un deuxième capteur 82 angulaire, de type potentiomètre par exemple, agencé sur le deuxième axe de pivotement 112. Les premier et deuxième capteurs fournissent respectivement au moyen de détermination 20 des informations relatives aux premier et deuxième angles principaux.

Enfin, la figure 9 présente un troisième mode de réalisation.

Les instruments 70 sont pourvus d'un premier et d'un deuxième moyens de mesure angulaires 131, 132 reliés au moyen de détermination 20.

Le premier moyen de mesure angulaire 131 est solidaire de la cellule 2 de manière à fournir au moyen de détermination 20 l'angle de roulis β montré sur la figure 3 et l'angle de tangage γ schématisé sur la figure 4. Ce premier moyen de mesure angulaire 131 peut être une centrale inertielle de l'aéronef ou encore un inclinomètre bidirectionnelle dédié.

Le deuxième moyen de mesure angulaire 132 est solidaire de l'élingue pour transmettre au moyen de détermination un premier angle secondaire αl' entre une première projection 3' de ladite élingue 3 sur un plan vertical transversal local P1 et la pesanteur P appliquée au point de fixation 9 ainsi qu'un deuxième angle secondaire α2' entre une deuxième projection 3" de l'élingue 3 sur un plan vertical longitudinal local P2 et ladite pesanteur P. Ce deuxième moyen de mesure angulaire 132 est par exemple un inclinomètre bidirectionnel agencé sur le crochet-délesteur 200.

Le moyen de détermination détermine alors par calcul le premier angle principal α1 en soustrayant l'angle de roulis β au premier angle secondaire α1', et le deuxième angle principal α2 en soustrayant l'angle de tangage γ au deuxième angle secondaire α2'.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, le moyen d'affichage peut afficher d'une part des lignes de délimitation et d'autre part des cercles concentriques centrées sur l'intersection des première et deuxièmes droites 41, 42.

Les lignes de délimitations peuvent être fixes durant l'intégralité du vol. Cependant, les lignes de délimitation peuvent avoir une géométrie qui évolue en temps réel en fonction des conditions de vol et par exemple en fonction de la tension de l'élingue, cette tension variant notamment en fonction des facteurs de charge.

## Revendications

1. Aéronef (1) muni d'une cellule (2) et d'une élingue (3) fixée à ladite cellule (2) par une structure porteuse (5), ladite élingue (3) étant fixée à un point de fixation (9) de ladite structure porteuse (5), un plan vertical transversal local (P1) passant par ledit point de fixation (9) étant parallèle à un axe de lacet (AX1) et à un axe de tangage (AX2) dudit aéronef (1), un plan vertical longitudinal local (P2) passant par ledit point de fixation (9) étant parallèle à un axe de lacet (AX1) et à un axe de roulis (AX3) dudit aéronef (1), lesdits plans verticaux longitudinal local (P2) et transversal local (P1) se coupant en un axe vertical (AX4) dudit aéronef (1),
**caractérisé en ce que** ledit aéronef (1) est pourvu d'un dispositif (10) d'aide au pilotage comportant :
- un moyen de détermination principal (20) d'un premier angle principal (α1) entre ledit axe vertical (AX4) et une première projection primaire (3') de ladite élingue (3) sur ledit plan vertical transversal local (P1) ainsi que d'un deuxième angle principal (α2) entre ledit axe vertical (AX4) et une deuxième projection primaire (3") de ladite élingue (3) sur ledit plan vertical longitudinal local (P2), et
- un moyen d'affichage (30) muni d'un écran de visualisation (31) pour afficher quantitativement lesdits premier et deuxième angles principaux (α1, α2).

2. Aéronef selon la revendication 1,
**caractérisé en ce que** ledit moyen d'affichage (30) présente :
- une première et une deuxième droites (41, 42) sécantes en une intersection (43) représentant ledit axe vertical (AX4), la première droite (41) étant une abscisse d'un diagramme (40) donnant ledit premier angle principal (α1) et la deuxième droite (42) étant l'ordonnée dudit diagramme (40) donnant ledit deuxième angle principal (α2), et
- une pluralité de lignes de délimitations (50) fermées délimitant chacune une zone (61, 62, 63, 64) correspondant à une criticité donnée,
et **en ce que** ledit moyen d'affichage (30) affiche en temps réel dans ledit diagramme (40) un marquage (56) représentant ladite élingue (3), ledit marquage (56) étant mobile en fonction de la position de l'élingue (3) relativement à ladite cellule (2).

3. Aéronef selon la revendication 2,
**caractérisé en ce que** au moins une ligne de délimitation (51, 52) est un cercle centré sur ladite intersection (43).

4. Aéronef selon l'une quelconque des revendications 2 à 3, **caractérisé en ce que**, ledit moyen d'affichage (30) comprend :
- une première zone (61) entre ladite intersection (43) et une première ligne de délimitation (51) dans laquelle une position de l'élingue par rapport à l'axe vertical (AX4) déterminée à l'aide du couple premier angle principal (α1)/ deuxième angle principal (α2) est une position optimale inférieure à une première position limite prédéterminée représentée par la première ligne de délimitation (51),
- une deuxième zone (62) entre une première ligne de délimitation (51) et une deuxième ligne de délimitation (52) entourant ladite première ligne de délimitation (51) dans laquelle une position de l'élingue par rapport à l'axe vertical (AX4) déterminée à l'aide du couple premier angle principal (α1)/ deuxième angle principal (α2) est une position acceptable comprise entre la première position limite prédéterminée et une deuxième position limite prédéterminée représentée par la deuxième ligne de délimitation (52),
- une troisième zone (63) entre une deuxième ligne de délimitation (52) et une troisième ligne de délimitation (53) entourant ladite deuxième ligne de délimitation (52) dans laquelle une position de l'élingue par rapport à l'axe vertical (AX4) déterminée à l'aide du couple premier angle principal (α1)/ deuxième angle principal (α2) est une position à risque située entre la deuxième limite prédéterminée et une troisième limite prédéterminée représentée par la troisième ligne de délimitation (53).

5. Aéronef selon la revendication 4,
**caractérisé en ce que**, ledit moyen d'affichage (30) comprend une quatrième zone (64) interdite au-delà d'une troisième ligne de délimitation (53) entourant une deuxième ligne de délimitation (52).

6. Aéronef selon la revendication 5,
**caractérisé en ce que**, ledit moyen d'affichage (30) comprend une quatrième ligne de délimitation (54) entourant une troisième ligne de délimitation (53) pour borner ladite quatrième zone (64).

7. Aéronef selon l'une quelconque des revendications 4 à 6,
**caractérisé en ce que** ledit dispositif (10) comporte un moyen d'alarme (32, 33) sonore apte à délivrer un signal sonore lorsque ledit marquage (56) est positionné dans l'une desdites zones (61, 62, 63, 64), ledit signal sonore variant d'une zone (61, 62, 63, 64) à une autre.

8. Aéronef selon l'une quelconque des revendications précédentes,
**caractérisé en ce que** ladite structure porteuse (5) comportant un premier et un deuxième axes de pivotement (111, 112) orthogonaux entre eux, ledit dispositif (10) comporte :
- un premier capteur (81) angulaire agencé sur ledit premier axe de pivotement (111), ledit premier capteur (81) étant relié audit moyen de détermination principal (20) pour lui transmettre un signal relatif audit premier angle principal (α1), et
- un deuxième capteur (82) angulaire agencé sur ledit deuxième axe de pivotement (112), ledit deuxième capteur (82) étant relié audit moyen de détermination principal (20) pour lui transmettre un signal relatif audit deuxième angle principal (α2).

9. Aéronef selon l'une quelconque des revendications 1 à 7,
**caractérisé en ce que**, un plan horizontal absolu (P3') passant par ledit point de fixation (9) et étant perpendiculaire à la pesanteur (P) appliquée au point de fixation (9), un plan vertical longitudinal en roulis (P2') passant par ledit point de fixation (9) et présentant une angulation égale à un angle de roulis (β) dudit aéronef avec ledit plan vertical longitudinal local (P2), un plan vertical transversal en tangage (P1') passant par ledit point de fixation (9) et présentant une angulation égale à un angle de tangage (γ) dudit aéronef avec ledit plan vertical transversal local (P1) ledit dispositif (10) comporte un premier moyen de mesure angulaire (131) solidaire dudit aéronef (1) relié audit moyen de détermination principal (20) pour transmettre à ce moyen de détermination principal (20) des informations relatives à un angle de roulis (β) et à un angle de tangage (γ) dudit aéronef (1), ledit dispositif comportant un deuxième moyen de mesure angulaire (132) relié audit moyen de détermination principal (20) pour transmettre à ce moyen de détermination principal (20) des informations relatives à un premier angle secondaire (α1) entre une première projection (3') de ladite élingue (3) sur un plan vertical transversal local (P1) et ladite pesanteur (P) appliquée audit point de fixation ainsi qu'à un deuxième angle secondaire (α2') entre une deuxième projection (3") de ladite élingue (3) sur un plan vertical longitudinal local (P2) et ladite pesanteur appliquée (P) audit point de fixation.

10. Procédé d'aide au pilotage d'un aéronef (1) muni d'un cellule (2) et d'une élingue (3) fixée à ladite cellule (2) par une structure porteuse (5), ladite élingue (3) étant fixée à un point de fixation (9) de ladite structure porteuse (5), un plan vertical transversal local (P1) passant par ledit point de fixation (9) étant parallèle à un axe de lacet (AX1) et à un axe de tangage (AX2) dudit aéronef (1), un plan vertical longitudinal local (P2) passant par ledit point de fixation (9) étant parallèle à un axe de lacet (AX1) et à un axe de roulis (AX3) dudit aéronef (1), lesdits plans verticaux longitudinal local (P2) et transversal local (P1) se coupant en un axe vertical (AX4) dudit aéronef (1),
au cours duquel :
- on détermine un premier angle principal (α1) entre ledit axe vertical (AX4) et une première projection primaire (3') de ladite élingue (3) sur ledit plan vertical transversal local (P1) ainsi qu'un deuxième angle principal (α2) entre ledit axe vertical (AX4) et une deuxième projection primaire (3") de ladite élingue (3) sur ledit plan vertical longitudinal local (P2), et
- on affiche quantitativement lesdits premier et deuxième angles principaux (α1, α2) pour les présenter à un pilote dudit aéronef (1).

11. Procédé selon la revendication 10,
**caractérisé en ce que**, un écran de visualisation (31) présentant :
- une première et une deuxième droites (41, 42) sécantes en une intersection (43) représentant ledit axe vertical (AX4), la première droite (41) étant une abscisse d'un diagramme (40) donnant ledit premier angle principal (α1) et la deuxième droite (42) étant une ordonnée dudit diagramme (40) donnant ledit deuxième angle principal (α2), et
- une pluralité de lignes de délimitation (50) fermées délimitant chacune une zone (61, 62, 63, 64) correspondant à une criticité donnée,
on affiche en temps réel dans ledit diagramme (40) un marquage (56) représentant la position de ladite élingue (3), ledit marquage (56) étant mobile en fonction de la position de l'élingue (3) relativement à ladite cellule (2).

## Claims

1. Aircraft (1) provided with an airframe (2) and a sling (3) fastened to said airframe (2) by a carrier structure (5), said sling (3) being fastened to a fastening point (9) of said carrier structure (5), a local transverse vertical plane (P1) passing through said fastening point (9) being parallel to a yaw axis (AX1) and to a pitch axis (AX2) of said aircraft (1), a local longitudinal vertical plane (P2) passing through said fastening point (9) being parallel to a yaw axis (AX1) and to a roll axis (AX3) of said aircraft (1), said local longitudinal and transverse vertical planes (P2 and P1) intersecting at a vertical axis (AX4) of said aircraft (1),
**characterised in that** said aircraft (1) is provided with a piloting assistance device (10) comprising:
- a main determination means (20) for determining a first main angle (α1) between said vertical axis (AX4) and a first primary projection (3') of said sling (3) on said local transverse vertical plane (P1) and a second main angle (α2) between said vertical axis (AX4) and a second primary projection (3") of said sling (3) on said local longitudinal vertical plane (P2), and
- a display means (30) provided with a display screen (31) for quantitatively displaying said first and second main angles (α1, α2).

2. Aircraft according to Claim 1,
**characterised in that** said display means (30) presents:
- a first straight line and a second straight line (41, 42) intersecting at an intersection (43) representing said vertical axis (AX4), the first straight line (41) being an abscissa of a diagram (40) giving said first main angle (α1), and the second straight line (42) being the ordinate of said diagram (40) giving said second main angle (α2), and
- a plurality of closed limit lines (50) each defining a corresponding zone (61, 62, 63, 64) of a given criticality,
and **in that** said display means (30) displays in real time a mark (56) representing said sling (3) in said diagram (40), said mark (56) being movable as a function of the position of the sling (3) relative to said airframe (2).

3. Aircraft according to Claim 2,
**characterised in that** at least one limit line (51, 52) is a circle centred on said intersection (43).

4. Aircraft according to any one of Claims 2 to 3, **characterised in that** said display means (30) comprises:
- a first zone (61) between said intersection (43) and a first limit line (51), in which a position of the sling relative to the vertical axis (AX4) as determined using the first main angle (α1)/second main angle (α2) pair is an optimum position smaller than a first predetermined limit position represented by the first limit line (51),
- a second zone (62) between a first limit line (51) and a second limit line (52) surrounding said first limit line (51), in which a position of the sling relative to the vertical axis (AX4) as determined using the first main angle (α1)/second main angle (α2) pair is an acceptable position lying between the predetermined first limit position and a predetermined second limit position represented by the second limit line (52),
- a third zone (63) between a second limit line (52) and a third limit line (53) surrounding said second limit line (52), in which a position of the sling relative to the vertical axis (AX4) as determined using the first main angle (α1)/second main angle (α2) pair is a risky position situated between the second predetermined limit and a third predetermined limit represented by the third limit line (53).

5. Aircraft according to Claim 4,
**characterised in that** said display means (30) comprises a forbidden fourth zone (64) beyond a third limit line (53) surrounding a second limit line (52).

6. Aircraft according to Claim 5,
**characterised in that** said display means (30) comprises a fourth limit line (54) surrounding a third limit line (53) to limit said fourth zone (64).

7. Aircraft according to any one of Claims 4 to 6, **characterised in that** said device (10) comprises an audible alarm means (32, 33) suitable for delivering an audible signal when said mark (56) is positioned in one of said zones (61, 62, 63, 64), said audible signal varying from one zone (61, 62, 63, 64) to another.

8. Aircraft according to any one of the preceding claims, **characterised in that** said carrier structure (5) comprises a first pivot axis and a second pivot axis (111, 112) which are mutually orthogonal, and said device (10) comprises:
- a first angle sensor (81) arranged on said first pivot axis (111), said first sensor (81) being connected to said main determination means (20) to transmit thereto a signal relating to said first main angle (α1), and
- a second angle sensor (82) arranged on said second pivot axis (112), said second sensor (82) being connected to said main determination means (20) to transmit thereto a signal relating to said second main angle (α2).

9. Aircraft according to any one of Claims 1 to 7, **characterised in that**, for an absolute horizontal plane (P3') passing through said fastening point (9) and being perpendicular to the weight (P) applied to said fastening point (9), a longitudinal vertical roll plane (P2') passing through said fastening point (9) and having an angle equal to a roll angle (β) of said aircraft with said local longitudinal vertical plane (P2), and a transverse vertical pitch plane (P1') passing through said fastening point (9) and having an angle equal to a pitch angle (γ) of said aircraft with said local transverse vertical plane (P1), said device (10) comprises a first angle measurement means (131) secured to said aircraft (1) and connected to said determination means (20) to transmit to said main determination means (20) information relating to a roll angle (β) and a pitch angle (γ) of said aircraft (1), said device comprising a second angle measurement means (132) connected to said main determination means (20) to transmit to said main determination means (20) information relating to a first secondary angle (α1') between a first projection (3') of said sling (3) on a local transverse vertical plane (P1) and said weight (P) applied to said fastening point and also to a second secondary angle (α2') between a second projection (3") of said sling (3) on a local longitudinal vertical plane (P2) and said weight applied (P) to said fastening point.

10. Method of assisting the piloting of an aircraft (1) provided with an airframe (2) and a sling (3) fastened to said airframe (2) by a carrier structure (5), said sling (3) being fastened to a fastening point (9) of said carrier structure (5), a local transverse vertical plane (P1) passing through said fastening point (9) being parallel to a yaw axis (AX1) and to a pitch axis (AX2) of said aircraft (1), a local longitudinal vertical plane (P2) passing through said fastening point (9) being parallel to a yaw axis (AX1) and to a roll axis (AX3) of said aircraft (1), said local longitudinal and transverse vertical planes (P2 and P1) intersecting at a vertical axis (AX4) of said aircraft (1),
in the course of which:
- a first main angle (α1) between said vertical axis (AX4) and a first primary projection (3') of said sling (3) on said local transverse vertical plane (P1) is determined and a second main angle (α2) between said vertical axis (AX4) and a second primary projection (3") of said sling (3) on said local longitudinal vertical plane (P2) is determined; and
- said first and second main angles (α1, α2) are quantitatively displayed so as to present them to a pilot of said aircraft (1).

11. Method according to claim 10,
**characterised in that**, for a display screen (31) presenting:
- first and second straight lines (41, 42) intersecting at an intersection (43) representing said vertical axis (AX4), the first straight line (41) being an abscissa of a diagram (40) giving said first main angle (α1), and the second straight line (42) being an ordinate of said diagram (40) giving said second main angle (α2), and
- a plurality of closed limit lines (50) each defining a corresponding zone (61, 62, 63, 64) of a given criticality,
a mark (56) representing the position of said sling (3) is displayed in real time in said diagram (40), said mark (56) being movable as a function of the position of the sling (3) relative to said airframe (2).

## Patentansprüche

1. Fluggerät (1) mit einer Kabine (2) und einem Hebegurt (3), der an der Kabine (2) über einen Trägeraufbau (5) befestigt ist, wobei der Hebegurt (3) an einem Befestigungspunkt (9) des Trägeraufbaus (5) befestig ist, wobei eine lokale vertikale, Querebene (P1) durch den Befestigungspunkt (9) parallel zu einer Gierachse (AX1) und zu einer Nickachse (AX2) des Fluggeräts (1) verläuft, wobei eine lokale vertikale Längsebene (P2) durch den Befestigungspunkt (9) parallel zu einer Gierachse (AX1) und einer Rollachse (AX3) des Fluggeräts (1) verläuft, wobei sich die lokale vertikale Längsebene (P2) und die lokale Querebene (P1) in einer vertikalen Achse (AX4) des Fluggeräts (1) schneiden,
**dadurch gekennzeichnet, dass** das Fluggerät (1) mit einem Steuerungshilfsgerät (10) versehen ist, welches aufweist:
- ein Hauptbestimmungsmittel (20) zur Bestimmung eines ersten Hauptwinkels
(α1) zwischen der vertikalen Achse (AX4) und einer ersten primären Projektion (3') des Hebegurts (3) auf die lokale vertikale Querebene (P1), sowie eines zweites Hauptwinkels (α2) zwischen der vertikalen Achse (AX4) und einer zweiten primären Projektion (3") des Hebegurts (3) auf die lokale vertikale Längsebene (P2), und
- ein Anzeigemittel (30) mit einem Anzeigebildschirm (31) zur quantitativen Anzeige der ersten und zweiten Hauptwinkel (α1, α2).

2. Fluggerät nach Anspruch 1,
**dadurch gekennzeichnet, dass** das Anzeigemittel (30) aufweist:
- eine erste und eine zweite Grade (41, 42), die sich in einem Schnittpunkt (43) schneiden, der die vertikale Achse (AX4) darstellt, wobei die erste Grade (41) eine Abszisse eines Diagramms (40) ist, die den ersten Hauptwinkel (α1) wiedergibt, und die zweite Grade (42) eine Ordinate des Diagramms (40) ist, die den zweiten Hauptwinkel (α2) wiedergibt, und
- eine Mehrzahl von geschlossenen Begrenzungslinien (50), die jeweils einen
Bereich (61, 62, 63, 64) eingrenzen, der einer gegebenen Kritizität entspricht, und dadurch, dass das Anzeigemittel (30) in Echtzeit in dem Diagramm (40) eine Markierung (56) anzeigt, die den Hebegurt (3) darstellt, wobei die Markierung (56) in Abhängigkeit von der Position des Hebegurts (3) relativ zur Kabine (2) beweglich ist.

3. Fluggerät nach Anspruch 2,
**dadurch gekennzeichnet, dass** mindestens eine Begrenzungslinie (51, 52) ein auf den Schnittpunkt (43) zentrierter Kreis ist.

4. Fluggerät nach einem der Ansprüche 2 oder 3,
**dadurch gekennzeichnet, dass** das Anzeigemittel (30) aufweist:
- einen ersten Bereich (61) zwischen dem Schnittpunkt (43) und einer ersten Begrenzungslinie (51), in dem eine Position des Hebegurts relativ zu der Vertikalachse (AX4), bestimmt mit Hilfe des Wertepaares erster Hauptwinkel (α1)/zweiter Hauptwinkel (α2), eine optimale Position ist unterhalb einer ersten vorbestimmten Grenzposition, die durch die erste Begrenzungslinie (51) dargestellt ist,
- einen zweiten Bereich (62) zwischen einer ersten Begrenzungslinie (51) und einer zweiten Begrenzungslinie (52), die die erste Begrenzungslinie (51) umschließt, in dem eine Position des Hebegurts relativ zur vertikalen Achse (AX4), bestimmt mit Hilfe des Wertepaares erster Hauptwinkel (α1)/zweiter Hauptwinkel (α2), eine akzeptable Position darstellt, die zwischen der ersten vorbestimmten Grenzposition und einer zweiten vorbestimmten Grenzposition, die durch die zweite Begrenzungslinie (52) dargestellt ist, liegt,
- einen dritten Bereich (63) zwischen einer zweiten Begrenzungslinie (52) und einer dritten Begrenzungslinie (53), die die zweite Begrenzungslinie (52) umschließt, in dem eine Position des Haltegurts relativ zu der vertikalen Achse (AX4), bestimmt mit Hilfe des Wertepaares erster Hauptwinkel (α1)/zweiter Hauptwinkel (α2), eine Risiko-Position ist, die zwischen der zweiten vorbestimmten Grenze und einer dritten vorbestimmten Grenze, dargestellt durch die dritte Begrenzungslinie (53), liegt.

5. Fluggerät nach Anspruch 4,
**dadurch gekennzeichnet, dass** das Anzeigemittel (30) einen vierten verbotenen Bereich (64) aufweist, außerhalb einer dritten Begrenzungslinie (53), die eine zweite Begrenzungslinie (52) umschließt.

6. Fluggerät nach Anspruch 5,
**dadurch gekennzeichnet, dass** das Anzeigemittel (30) eine vierte Begrenzungslinie (54) aufweist, die eine dritte Begrenzungslinie (53) umschließt, um den vierten Bereich (64) einzugrenzen.

7. Fluggerät nach einem der Ansprüche 4 bis 6,
**dadurch gekennzeichnet, dass** die Vorrichtung (10) einen akustischen Alarmgeber (32, 33) aufweist, der ein akustisches Signal abgeben kann, wenn die Markierung (56) in einem der Bereiche (61, 62, 63, 64) positioniert ist, wobei das akustische Signal sich von einem Bereich (61, 62, 63, 64) zu einem anderen ändert.

8. Fluggerät nach einem der vorstehenden Ansprüche,
**dadurch gekennzeichnet, dass** der Trägeraufbau (5) eine erste und eine zweite Schwenkachse (111, 112) aufweist, die orthogonal zueinander sind, wobei die Vorrichtung (10) aufweist:
- einen ersten Winkelsensor (81), der auf der ersten Schwenkachse (111) angeordnet ist, wobei der erste Sensor (81) mit dem Hauptbestimmungsmittel (20) verbunden ist, um ihm ein Signal bezüglich des ersten Hauptwinkels (α1) zu übermitteln, und
- einen zweiten Winkelsensor (82), der auf der zweiten Schwenkachse (112) angeordnet ist, wobei der zweite Sensor (82) mit dem Hauptbestimmungsmittel (20) verbunden ist, um ihm ein Signal bezüglich des zweiten Hauptwinkels (α2) zu übermitteln.

9. Fluggerät nach einem der Ansprüche 1 bis 7,
**dadurch gekennzeichnet, dass** eine absolute Horizontalebene (P3') durch den Befestigungspunkt (9) und senkrecht zu der Schwerkraft (P), mit der der Befestigungspunkt (9) beaufschlagt ist, verläuft, eine vertikale Längs-Rollebene (P2') durch den Befestigungspunkt (9) verläuft und einen Winkel einnimmt, der gleich einem Rollwinkel (β) des Fluggeräts bezüglich der lokalen vertikalen Längsebene (P2) ist, eine vertikale Quer-Nickebene (P1') durch den Befestigungspunkt (9) verläuft und einen Winkel einnimmt, der gleich einem Nickwinkel (γ) des Fluggeräts bezüglich der lokalen vertikalen Querebene (P1) ist, wobei die Vorrichtung (10) einen ersten Winkelmesssensor (131) aufweist, der am Fluggerät (1) befestigt ist und mit dem Hauptbestimmungsmittel (20) verbunden ist, um diesem Informationen bezüglich eines Rollwinkels (β) und eines Nickwinkels (γ) des Fluggeräts (1) zu übertragen, wobei die Vorrichtung einen zweiten Winkelmesssensor (132) aufweist, der mit dem Hauptbestimmungsmittel (20) verbunden ist, um ihm Informationen bezüglich eines ersten sekundären Winkels (α1') zwischen einer ersten Projektion (3') des Hebegurts (3) auf eine lokale vertikale Querebene (P1) und der Schwerkraft (P), mit der der Befestigungspunkt beaufschlagt ist, zu übertragen, sowie Informationen bezüglich eines zweiten Sekundärwinkels (α2') zwischen einer zweiten Projektion (3") des Hebegurts (3) auf eine lokale vertikale Längsebene (P2) und der Schwerkraft (P), mit der der Befestigungspunkt beaufschlagt ist.

10. Verfahren zur Unterstützung der Steuerung eines Fluggeräts (1) mit einer Kabine (2) und einem Hebegurt (3), der an der Kabine (2) über einen Trägeraufbau (5) befestigt ist, wobei der Hebegurt (3) an einem Befestigungspunkt (9) des Trägeraufbaus (5) befestigt ist, wobei eine lokale vertikale Querebene (P1) durch den Befestigungspunkt (9) parallel zu einer Gierachse (AX1) und zu einer Nickachse (AX2) des Fluggeräts (1) verläuft, wobei eine lokale vertikale Längsebene (P2) durch den Befestigungspunkt (9) parallel zu einer Gierachse (AX1) und zu einer Rollachse (AX3) des Fluggeräts (1) verläuft, wobei die lokale vertikale Längsebene (P2) und die lokale Querebene (P1) sich in einer vertikalen Achse (AX4) des Fluggeräts (1) schneiden,
während dem:
- man einen ersten Hauptwinkel (α1) zwischen der vertikalen Achse (AX4) und einer ersten primären Projektion (3') des Hebegurts (3) auf die lokale vertikale Querebene (P1) bestimmt, sowie einen zweiten Hauptwinkel (α2) zwischen der vertikalen Achse (AX4) und einer zweiten primären Projektion (3") des Hebegurts (3) auf die lokale vertikale Längsebene (P2), und
- der erste und der zweite Hauptwinkel (α1, α2) quantitativ angezeigt werden, um sie einem Piloten des Fluggeräts (1) zu präsentieren.

11. Verfahren nach Anspruch 10,
**dadurch gekennzeichnet, dass** ein Anzeigebildschirm (31) darstellt:
- eine erste und eine zweite Grade (41, 42), die sich in einem Schnittpunkt (43) schneiden, der die vertikale Achse (AX4) darstellt, wobei eine erste Grade (41) eine Abszisse eines Diagramms (40) ist, die den ersten Hauptwinkel (α 1) wiedergibt, und die zweite Grade (42) eine Ordinate des Diagramms (40) ist, die den zweiten Hauptwinkel (α2) wiedergibt, und
- eine Mehrzahl von geschlossenen Begrenzungslinien (50), die jeweils einen Bereich (61, 62, 63, 64) eingrenzen, der einer gegebenen Kritizität entspricht, wobei in Echtzeit in dem Diagramm (40) eine Markierung (56) angezeigt wird, die die Position des Hebegurts (3) darstellt, wobei die Markierung (56) in Abhängigkeit von der Position des Hebegurts (3) relativ zu der Kabine (2) beweglich ist.
